# EUROPÄISCHE PATENTSCHRIFT

(11) **EP 0 684 176 B1**
(45) Veröffentlichungstag und Bekanntmachung des Hinweises auf die Patenterteilung: **29.07.1998**
(21) Anmeldenummer: 95107418.6
(22) Anmeldetag: 16.05.1995
(51) Int. Cl.: B62B 3/14, B62B 3/18

(54) **Stapelbarer Einkaufswagen**
Nestable shopping trolley
Chariot d'achat emboîtable

(30) Priorität: 25.05.1994 DE 9408491 U
(43) Veröffentlichungstag der Anmeldung: 29.11.1995
(73) Patentinhaber: WANZL METALLWARENFABRIK GMBH, D-89336 Leipheim (DE)
(72) Erfinder: Eberlein, Herbert, D-89347 Bubesheim (DE)

(56) Entgegenhaltungen:
- DE-A- 3 631 701
- DE-U- 8 500 639

## Beschreibung

Die Erfindung betrifft einen stapelbaren Einkaufswagen, mit einem Fahrgestell, mit einer Warentrageinrichtung, deren Boden in Schieberichtung des Einkaufswagens ansteigend angeordnet ist und deren hinteres Ende durch eine verschwenkbare Rückwand begrenzt ist, ferner mit einer Schiebeeinrichtung und mit einer im hinteren Bereich des Einkaufswagens vorgesehenen, mit einer Abstellfläche ausgestatteten Ablage, die zur Aufnahme größerer Gegenstände bestimmt ist und die sich aus einer Nichtgebrauchslage in eine Gebrauchslage und umgekehrt bewegen läßt.

Bei Einkaufswagen dieser Art sind die Ablagen so gestaltet, daß sie sich zum Transport von Getränkekisten eignen. Die Ablagen lassen sich aus einer Nichtgebrauchslage nach hinten in eine Gebrauchslage bewegen oder verschwenken, in der sie verharren. Dadurch ist es möglich, mit beiden Händen eine Getränkekiste auf der Abstellfläche der Ablage aufzusetzen. Da Getränkekisten, ob mit leeren oder vollen Flaschen gefüllt, relativ schwere Gegenstände sind, genügen kleine oder niedrig angeordnete Anschläge, um eine Getränkekiste vor dem Herabfallen zu bewahren.

Es gibt Märkte, die ihre Getränke nicht in Getränkekisten, sondern schrumpfverpackt als Flaschenpackungen anbieten. Mit den bisher bekannten, eine bewegbare Ablage aufweisenden Einkaufswagen ist es nicht möglich, solche Flaschenpackungen oder auch andere größere Verkaufsgegenstände wie Waschmittelschachteln, Waschmittelflaschen, verpacktes WC-Papier oder Küchentücherpackungen, kurz alle größeren Verkaufsgegenstände, die nicht als Kiste ausgebildet sind, auf der Ablage zu transportieren, ohne riskieren zu müssen, daß diese Gegenstände nach kurzer Fahrt von der Ablage herabfallen.

Ausgehend von diesem Stand der Technik besteht die Aufgabe der Erfindung darin, einen gattungsgemäßen Einkaufswagen so weiterzuentwickeln, daß mit dessen Ablage schrumpfverpackte Flaschen, Schachteln, größere Verpackungen und dergleichen sicher transportiert werden können.

Die Lösung der Aufgabe besteht darin, daß die Ablage nach Art einer Schaukel gestaltet ist, deren über der Abstellfläche angeordnete Schwenkachse in Bezug zum Schwerpunkt der Ablage so gewählt ist, daß sich die Abstellfläche bei eingependelter Nichtgebrauchslage der Ablage zumindest teilweise unterhalb des Grundrisses des Bodens der Warentrageinrichtung befindet.

Durch die vorgeschlagene Lösung können 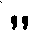 größere" Gegenstände, die kleiner oder schmäler sind als die üblichen Getränkekisten, sicher auf der Ablage transportiert werden. Ein oder mehrere auf der Abstellfläche abgestellte Gegenstände werden von drei Seiten vom Anschlag umfaßt. Die vierte Seite bildet die Rückwand. Durch die zweckmäßige Anordnung der Schwenkachse in Bezug zur Abstellfläche ist die Ablage nicht nur in ihrer Nichtgebrauchslage bestrebt, in Schieberichtung des Einkaufswagens zu schwenken, sondern dies gilt erst recht, wenn sich ein Gegenstand auf der Ablage befindet. Durch das Gewicht des Gegenstandes wird eine resultierende Kraft gebildet, welche versucht, die Ablage in Schieberichtung zu verschwenken. Dies führt dazu, daß der auf der Abstellfläche der Ablage befindliche Gegenstand zwischen einem rückwärtigen, an der Ablage befindlichen Anschlagmittel und der Rückseite des Einkaufswagens, insbesondere der Rückwand eingeklemmt wird. Er kann nicht von der Ablage fallen. Die Ablage paßt sich daher von selbst immer der Dicke bzw. der in Schieberichtung des Einkaufswagens gemessenen Tiefe eines auf der Abstellfläche befindlichen Gegenstandes an. Gilt es einen größeren Gegenstand, beispielsweise eine Flaschenpackung auf der Ablage zu transportieren, so braucht die schaukelartige Ablage mit einer Hand nur so weit nach rückwärts geschwenkt zu werden, bis die mit der anderen Hand getragene Flaschenpackung zwischen dem Anschlagmittel und der Rückwand Platz findet, um auf die Abstellfläche gestellt zu werden. Läßt man nun die Ablage los, versucht diese nach vorne in Schieberichtung des Einkaufswagens zu schwenken. Die Flaschenpackung verhindert dies und wird dadurch eingespannt. Will man den Gegenstand von der Ablage abnehmen, genügt es, den Gegenstand anzuheben und ihn von der Ablage zu nehmen. Die Ablage braucht bei diesem Vorgang nicht angefaßt zu werden. Diese pendelt vielmehr nach dem Abnehmen des Gegenstandes von selbst in die Nichtgebrauchslage.
Man wird das oder die Anschlagmittel, welche verhindern, daß ein auf der Ablage befindlicher Gegenstand nach hinten herabfällt, etwa 80 bis 150mm über der Abstellfläche anordnen, während es zweckmäßig ist, die in Schieberichtung des Einkaufswagens gemessene Tiefe T der Abstellfläche mit etwa 150mm anzusetzen. Ebenso wird man die geneigte Lage der Abstellfläche so wählen, daß diese bei einer Vielzahl von annähernd gleich dicken Artikeln eine Lage einnimmt, in der sie in etwa einen rechten Winkel mit der Rückwand der Warentrageinrichtung bildet. Dies bedeutet, daß die Abstellfläche der Ablage in Gebrauchslage gewöhnlich eine entgegengesetzt zur Schieberichtung nach hinten abfallende Lage einnimmt.

Nun ist durch das deutsche Gebrauchsmuster G 85 00 639.4 ein Einkaufswagen bekannt, der eine rückwärtige Ablage zum Transport von Getränkekisten aufweist. Zu diesem Zweck ist eine ortsfeste Abstellfläche vorgesehen, die nach rückwärts über den Boden der Warentrageinrichtung hinausragt. Die Abstellfläche bildet eine erste Auflagestelle für die Getränkekiste. Eine zweite Auflagestelle wird durch einen bügelförmigen Anschlag gebildet, der an der Schiebeeinrichrung um eine horizontale Achse schwenkbar gelagert ist. An der so gebildeten zweiten Auflagestelle sind ferner Anschläge vorgesehen, welche die Getränkekiste nach rückwärts begrenzen. Obwohl der bügelförmige Anschlag als schaukelförmiges Teil gestaltet ist, ist der eben genannte Einkaufswagen insofern als gattungsfrend einzustufen, da dessen Ablage nicht ohne die ortsfeste Abstellfläche auskommt. Ein allein auf dem bügelförmigen Anschlag abgestellter Gegenstand würde sofort vom Anschlag herabfallen, es sei denn, es handelt sich bei besagtem Gegenstand um ein Teil, das man um den Anschlag herumhängen kann. Flaschenpackungen oder Schachteln lassen sich vom Anschlag allein nicht transportieren.

Durch die EP 0 254 210 B1 ist ferner ein Einkaufswagen bekannt, dessen Ablage ebenfalls um eine horizontale Schwenkachse bewegbar gelagert ist. Auch dieser Einkaufswagen eignet sich nur zum Transport von Getränkekisten, da seine Ablage in der Gebrauchslage verharrt und seine Anschlagmittel relativ niedrig ausgebildet sind. Eine Flaschenpackung könnte allenfalls auf die Ablage gelegt werden. Eine weitere würde herabfallen. Außerdem unterscheidet sich dieser Einkaufswagen vom erfindungsgemäßen Einkaufswagen dadurch, daß dessen Ablage nicht pendelnd aufgehängt ist, daß vielmehr die horizontale Schwenkachse unterhalb der Abstellfläche vorgesehen ist und daß in Nichtgebrauchslage der Ablage deren Abstellfläche in Schieberichtung des Einkaufswagens abfallend angeordnet ist. Von ausschlaggebender Bedeutung ist jedoch, daß die Ablage immer in der gleichen Gebrauchslage verharrt, unabhängig davon, wie dick ein auf der Abstellfläche befindlicher Gegenstand ist. Ein auf dieser Ablage abgestellter Gegenstand wird nicht zwischen der Rückwand der Warenfrageinrichtung und dem wenigstens einen Anschlagmittel eingespannt, wie es die Erfindung in vorteilhafter Weise ermöglicht.

Anhand von Ausführungsbeispielen wird die Erfindung näher erläutert. Es zeigt
- Fig. 1: einen Einkaufswagen, dessen Ablage mit einer aus sechs Flaschen bestehenden Flaschenpackung beladen ist;
- Fig. 2: den gleichen Einkaufswagen in Seitenansicht sowie
- Fig. 3: ebenfalls den gleichen Einkaufswagen mit in Nichtgebrauchslage befindlicher Ablage.

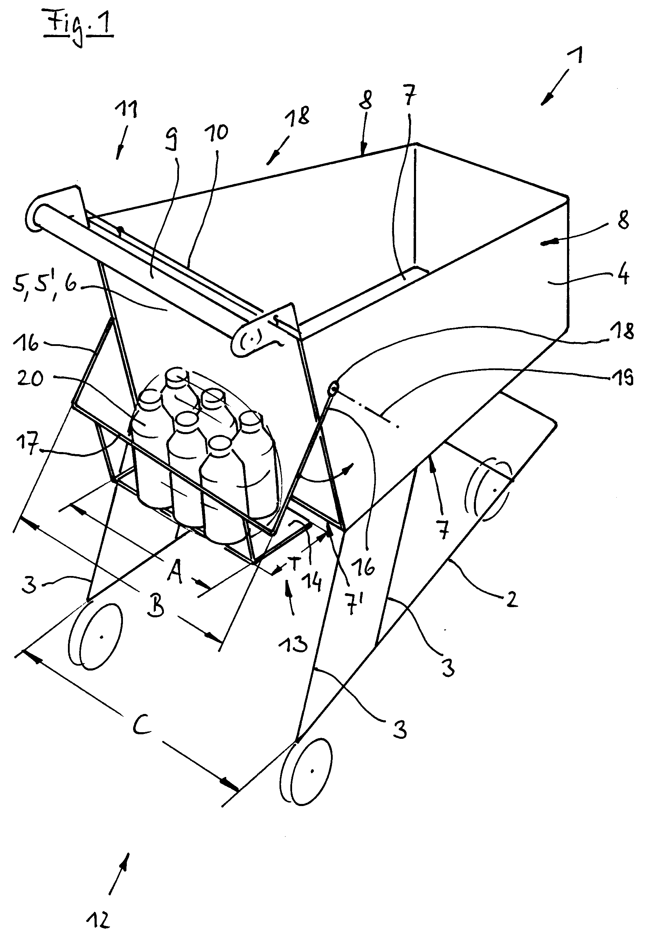

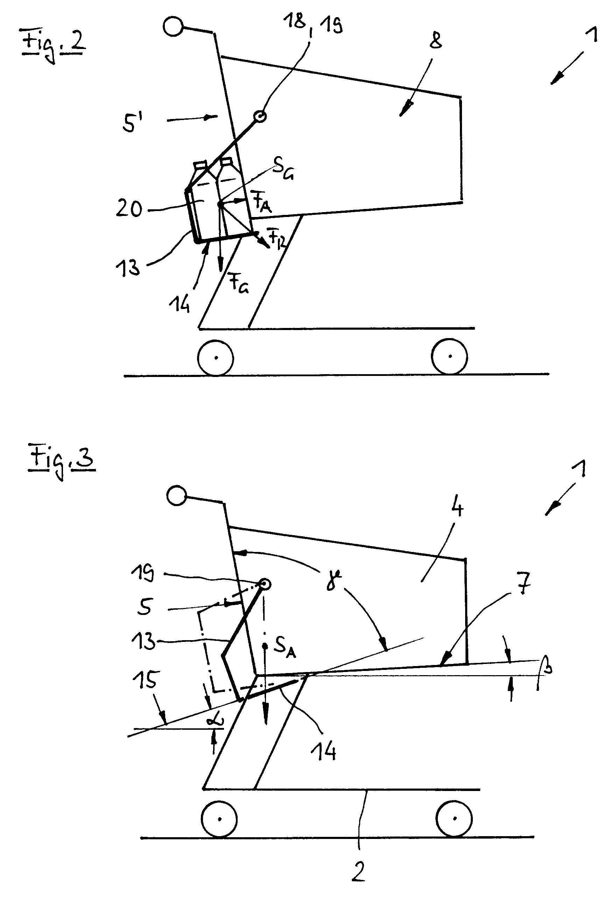

Der in Fig. 1 dargestellte Einkaufswagen 1 ist nur einer von vielen gängigen Einkaufswagen 1, bei denen die Erfindung anwendbar ist. Alle diese Einkaufswagen 1 weisen ein Fahrgestell 2 auf, das eine Warentrageinrichtung 4 in der bevorzugten Form eines Korbes oder allgemein eines Behältnisses trägt. Am hinteren Ende 11 des Einkaufswagens 1 ist eine Schiebeeinrichtung 9 vorgesehen, die entweder am Fahrgestell 2, oder wie üblich an der Warentrageinrichtung 4 angeordnet ist. Eine aus Drahtgitter und/oder aus Kunststoff bestehende Rückwand 5, die das hintere Ende 6 der Warentrageinrichtung 4 begrenzt, ist in bekannter Weise um eine oben liegende horizontale Achse 10 verschwenkbar gelagert, damit in ebenfalls bekannter Weise gleiche Einkaufswagen 1 platzsparend ineinandergeschoben werden können. Sowohl die Warentrageinrichtung 4, als auch das Fahrgestell 2, sind deshalb entsprechend konisch, gewöhnlich in Schieberichtung sich verjüngend gestaltet. Im hinteren Bereich 12 des Einkaufswagens 1 ist eine Ablage 13 vorgesehen, die zur Aufnahme größerer Gegenstände 20 wie Flaschenpackungen, Schachteln, Gebinde oder sonstiger Verpackungen geeignet ist. Die Ablage 13 ist nach Art einer Schaukel gestaltet. Sie weist eine Abstellfläche 14 auf, von der zu beiden Seiten je ein Träger 16 nach oben führt. Die Träger 16 und damit die Ablage 13 sind um eine horizontale, quer zur Schieberichtung des Einkaufswagens 1 vorgesehene Schwenkachse 19 bewegbar gelagert, die höher als die Abstellfläche 14 angeordnet ist. Oberhalb der Abstellfläche 14 sind die Träger 16 durch wenigstens ein Anschlagmittel 17 in der bevorzugten Form eines Querstabes verbunden. Die Anlenkstellen 18 für die Ablage 13 sind bevorzugt an den Außenseiten der Seitenwände 8 der Warentrageinrichtung 4 angeordnet. Auf der Abstellfläche 14 ruht ein größerer Gegenstand 20 in Form einer aus sechs Flaschen bestehenden Flaschenpackung. Die Flaschenpackung wird an den Seiten durch die Träger 16 und nach hinten durch das wenigstens eine Anschlagmittel 17 begrenzt. Gegenüber den Anschlagmitteln 17 liegt die Flaschenpackung an der Rückseite 5' des Einkaufswagens 1, bevorzugt an der Rückwand 5 der Warentrageinrichtung 4 an. Wie insbesondere aus Fig. 2 ersichtlich, bewirkt die Gewichtskraft eines Gegenstandes 20, beispielsweise der Flaschenpackung, daß die Ablage 13 bestrebt ist, in Schieberichtung nach vorne zu schwenken (Pfeil). Dadurch wird der Gegenstand 20 gegen die Rückseite 5' des Einkaufswagens 1 gedrückt. Je nach Dicke eines Gegenstandes 20 nimmt die Ablage 13 eine mehr oder weniger weit ausgeschwenkte Lage ein, d.h., die Ablage 13 paßt sich in ihrer ausgeschwenkten Lage von selbst der Dicke des jeweiligen Gegenstandes 20 an. Die Breite A der Abstellfläche 14 ist kleiner als die lichte Weite B der Träger 16 der Ablage 13. Die Abstellfläche 14 befindet sich in Nichtgebrauchslage zwischen den Stützen 3 des Fahrgestelles 2, welche die Warentrageinrichtung 4 tragen. Die Träger 16 der Ablage 13 führen an den Außenseiten der Seitenwände 8 entlang nach unten zur Abstellfläche 14. Derart gestaltete Einkaufswagen 1 lassen sich somit platzsparend ineinanderschieben, da erstens die lichte Weite B der Träger 16 größer ist als die maximale Breite der Warentrageinrichtung 4 eines rückwärtig einzuschiebenden Einkaufswagens 1 und weil zweitens die Breite A der Abstellfläche 14 kleiner ist als die lichte Weite C der Stützen 3, ganz gleich wie diese in bekannter Weise gestaltet sind. Die Einkaufswagen 1 lassen sich ferner deshalb platzsparend stapeln, weil das wenigstens eine Anschlagmittel 17 in Nichtgebrauchslage der Ablage 13 höchstens auf gleicher Höhe oder tiefer angeordnet ist als die hintere untere Begrenzung 7' des Bodens 7 der Warentrageinrichtung 4.

Fig. 2 zeigt den in Fig. 1 beschriebenen Einkaufswagen 1 in Seitenansicht. Die schaukelartige Ausbildung der Ablage 13 ist deutlich erkennbar. Die horizontale Schwenkachse 19 der Ablage 13 und damit deren Anlenkstellen 18 oder Lager befinden sich bevorzugt innerhalb des Umrisses der Seitenwände 8. Auf der Abstellfläche 14 befindet sich ein größerer Gegenstand. Mit S_{G} ist der Schwerpunkt des Gegenstandes 20 bezeichnet. Der Schwerpunkt S_{G} ist bezogen auf die Schwenkachse 19 der Ablage 13 nach hinten versetzt. Durch die Gewichtskraft F_{G} wird eine resultierene Kraft F_{R} erzeugt, die in der Zeichnung linksdrehend auf die Ablage 13 einwirkt und eine Kraft F_{A} entstehen läßt, durch welche der Gegenstand 20 gegen die Rückseite 5' des Einkaufswagens 1 gedrückt wird. Anhand der Zeichnung läßt es sich leicht vorstellen, daß die Ablage 13 bei unterschiedlich dicken Gegenständen 20 auch unterschiedlich weit ausgeschwenkt ist.

Fig. 3 zeigt in Seitenansicht die unbeladene Ablage 13 in Nichtgebrauchslage. Der Schwerpunkt S_{A} der Ablage 13 befindet sich lotrecht unter der Schwenkachse 19. Die Ablage 13 ruht. Strichpunktiert ist eine ausgeschwenkte Position der Ablage 13 eingezeichnet. Der Schwerpunkt S_{A} der Ablage 13 ist nun bezogen auf die Schwenkachse 19 nach hinten versetzt. Läßt man die Ablage 13 in dieser ausgeschwenkten Lage los, schwenkt diese in Richtung Schieberichtung aus und erreicht pendelnd ihre Nichtgebrauchslage. Die Ebene 15 der Abstellfläche 14 ist in Schieberichtung des Einkaufswagens 1 mindestens gleich steil, bevorzugt jedoch steiler angeordnet (Winkel α) als der ebenfalls in Schieberichtung ansteigende Boden 7 (Winkel β) der Warentrageinrichtung 4. Durch diese Maßnahme wird erreicht, daß die Ebene 15 der Abstellfläche 14 im Bereich einer bevorzugten ausgeschwenkten Position der Ablage 13 einen Winkel zur Rückwand 5 von etwa 80° bis 100° einnimmt. Dadurch läßt sich eine Vielzahl unterschiedlicher Gegenstände 20, deren in Längsrichtung des Einkaufswagens 1 gemessene Dicken nicht wesentlich voneinander abweichen, platzsparend auf der Ablage 13 abstellen. In Nichtgebrauchslage der Ablage 13 bildet deshalb die Ebene 15 der Abstellfläche 14 einen spitzen Winkel γ mit der ebenfalls bevorzugt nach hinten geneigten Rückwand 5. Man wird aus ergonomischen Gründen die Lage der Schwenkachse 19 der Ablage 13 in Bezug zum Schwerpunkt S_{A} der Ablage 13 so wählen, daß in Nichtgebrauchslage der Ablage 13 deren Abstellfläche 14 zumindest teilweise, wenn nicht sogar vollständig unterhalb des Grundrisses des Bodens 7 der Warentrageinrichtung 4 angeordnet ist. Der Schwenkbereich der Ablage 13 kann durch einen nicht näher dargestellten an der Unterseite des Bodens 7 oder am Fahrgestell 2 befindlichen Anschlag begrenzt sein.

## Patentansprüche

1. Stapelbarer Einkaufswagen (1), mit einem Fahrgestell (2), mit einer Warentrageinrichtung (4), deren Boden (7) in Schieberichtung des Einkaufswagens ansteigend angeordnet ist und deren hinteres Ende (11) durch eine verschwenkbare Rückwand (5) begrenzt ist, ferner mit einer Schiebeeinrichtung und mit einer im hinteren Bereich des Einkaufswagens vorgesehenen, mit einer Abstellfläche (14) ausgestatteten Ablage (13), die zur Aufnahme größerer Gegenstände bestimmt ist und die sich aus einer Nichtgebrauchslage in eine Gebrauchslage und umgekehrt bewegen läßt, dadurch ***gekennzeichnet,*** daß die Ablage (13) nach Art einer Schaukel gestaltet ist, deren über der Abstellfläche (14) angeordnete Schwenkachse (19) in Bezug zum Schwerpunkt (S_{A}) der Ablage (13) so gewählt ist, daß sich die Abstellfläche (14) bei eingependelter Nichtgebrauchslage der Ablage (13) zumindest teilweise unterhalb des Grundrisses des Bodens (7) der Warentrageinrichtung (4) befindet.

2. Einkaufswagen nach Anspruch 1, dadurch ***gekennzeichnet,*** daß in Nichtgebrauchslage der Ablage (13) die Ebene (15) der Abstellfläche (14) gleich steil oder steiler angeordnet ist, als der Boden (7) der Warentrageinrichtung (4).

3. Einkaufswagen nach Anspruch 1 oder 2, dadurch ***gekennzeichnet,*** daß in Nichtgebrauchslage der Ablage (13) die Ebene (15) der Abstellfläche (14) mit der Rückwand (5) der Warentrageinrichtung (4) einen spitzen Winkel γ bildet.

4. Einkaufswagen nach einem der Ansprüche 1 bis 3, dadurch ***gekennzeichnet,*** daß in Gebrauchslage der Ablage (13) die Abstellfläche (14) eine entgegengesetzt zur Schieberichtung des Einkaufswagens (1) nach hinten abfallende Lage einnimmt.

5. Einkaufswagen nach einem der Ansprüche 1 bis 4, dadurch ***gekennzeichnet,*** daß von der Abstellfläche (14) Träger (16) nach oben führen und an Anlenkstellen (18) gelagert sind, die sich, auf der Schwenkachse (19) gelegen, an den Seifenwänden (8) oder innerhalb der Umrisse der Seitenwände (8) der Warentrageinrichtung (4) befinden.

6. Einkaufswagen nach Anspruch 5, dadurch ***gekennzeichnet,*** daß die Träger (16) an den Außenseiten der Seitenwände (8) nach unten zur Abstellfläche (14) führen.

7. Einkaufswagen nach einem der Ansprüche 5 oder 6, dadurch ***gekennzeichnet,*** daß die Träger (16) oberhalb der Abstellfläche (14) durch wenigstens ein Anschlagmittel (17) in Form eines Querstabes verbunden sind.

8. Einkaufswagen nach einem der Ansprüche 5 bis 7, dadurch ***gekennzeichnet,*** daß die Breite A der Abstellfläche (14) kleiner ist als die lichte Weite B der Träger (16) und kleiner ist als die lichte Weite C der Stützen (3) des Fahrgestelles (2), welche die Warentrageinrichtung (4) tragen.

9. Einkaufswagen nach einem der Ansprüche 7 oder 8, dadurch ***gekennzeichnet,*** daß das wenigstens eine Anschlagmittel (17) in Nichtgebrauchslage der Ablage (13) höchstens auf gleicher Höhe oder tiefer angeordnet ist, als die hintere untere Begrenzung (7') des Bodens (7) der Warentrageinrichtung (4).

10. Einkaufswagen nach einem der Ansprüche 1 bis 9, dadurch ***gekennzeichnet,*** daß die in Schieberichtung des Einkaufswagens (1) gemessene Tiefe T der Abstellfläche (14) etwa 150mm beträgt.

11. Einkaufswagen nach einem der Ansprüche 1 bis 10, dadurch ***gekennzeichnet**,* daß sich die Ablage (13) in ihrer ausgeschwenkten Gebrauchsage von selbst der Dicke des jeweiligen auf der Abstellfläche (14) befindlichen Gegenstandes (20) anpaßt.

## Claims

1. A stackable shopping trolley (1), having a chassis (2), having a goods carrying arrangement (4) whose base (7) is arranged to be upwards inclined in the advancing direction of the shopping trolley and whose rear end (11) is bounded by a pivotable rear wall (5), moreover having a pushing arrangement and having a rack (13) which is provided in the rear region of the shopping trolley, is provided with a depositing surface (14), is for receiving relatively large objects and can be moved from an out-of-use position into an in-use position and vice-versa, characterised in that the rack (13) is constructed in the manner of a swing whose pivot axis (19) arranged above the depositing surface (14) is selected in such a manner in relation to the centre of gravity (S_{A}) of the rack (13) that the depositing surface (14) is located at least partially below the horizontal projection of the base (7) of the goods carrying arrangement (4) when the rack (13) has swung pendulum-like into the out-of-use position.

2. A shopping trolley in accordance with Claim 1, characterised in that when the rack (13) is in the out-of-use position, the plane (15) of the depositing surface (14) is of the same steepness or is steeper than the base (7) of the goods carrying arrangement (4).

3. A shopping trolley in accordance with Claim 1 or 2, characterised in that when the rack (13) is in the out-of-use position, the plane (15) of the depositing surface (14) forms an acute angle γ with the rear wall (5) of the goods carrying arrangement (4).

4. A shopping trolley in accordance with any one of Claims 1 to 3, characterised in that when the rack (13) is in the in-use position, the depositing surface (14) assumes a position in which it slopes downward to the rear in the opposite direction to the advancing direction of the shopping trolley (1).

5. A shopping trolley in accordance with any one of Claims 1 to 4, characterised in that supports (16) extend upwards from the depositing surface (14) and are mounted at articulation sites (18) which are ― situated on the pivot axis (19) ― located on the lateral walls (8) or within the contours of the lateral walls (8) of the goods carrying arrangement (4).

6. A shopping trolley in accordance with Claim 5, characterised in that the supports (16) extend downwards, at the outer sides of the lateral walls (8), to the depositing surface (14).

7. A shopping trolley in accordance with Claim 5 or 6, characterised in that the supports (16) are connected above the depositing surface (14) by at least one stop means (17) in the form of a transverse bar.

8. A shopping trolley in accordance with any one of Claims 5 to 7, characterised in that the width A of the depositing surface (14) is narrower than the clearance B between the supports (16) and is narrower than the clearance C between the uprights (3) of the chassis (2) which bear the goods carrying arrangement (4).

9. A shopping trolley in accordance with Claim 7 or 8, characterised in that when the rack (13) is in the out-of-use position, the at least one stop means (17) is arranged at the most level with or at a lower level than the rear, lower boundary (7') of the base (7) of the goods carrying arrangement (4).

10. A shopping trolley in accordance with any one of Claims 1 to 9, characterised in that the depth T of the depositing surface (14), measured in the advancing direction of the shopping trolley (1), is approximately 150 mm.

11. A shopping trolley in accordance with any one of Claims 1 to 10, characterised in that when it is in its pivoted-out in-use position, the rack (13) automatically adapts itself to the thickness of the specific object (20) located on the depositing surface (14).

## Revendications

1. Chariot à provisions emboîtable (1), comprenant un châssis (2), un dispositif porteur de marchandises (4) dont le fond (7) est disposé en pente ascendante dans la direction de poussée du chariot à provisions et dont l'extrémité arrière (11) est délimitée par une cloison arrière pivotante (5), et comprenant également un dispositif de poussée et un casier (13) prévu dans la région arrière du chariot à provisions et doté d'une surface de rangement (14), qui est destiné à recevoir des objets de relativement grande taille et qui peut être déplacé d'une position de non utilisation dans une position d'utilisation et vice-versa, **caractérisé** en ce que le casier (13) est conçu à la manière d'une bascule, dont l'axe de pivotement (19) disposé au-dessus de la surface de rangement (14) est choisi, par rapport au centre de gravité (S_{A}) du casier (13), de telle sorte qu'en position rentrée de non utilisation du casier (13), la surface de rangement (14) se trouve au moins partiellement en dessous de la projection horizontale du fond (7) du dispositif porteur de marchandises (4).

2. Chariot à provisions selon la revendication 1, **caractérisé** en ce que, en position de non utilisation du casier (13), le plan (15) de la surface de rangement (14) est disposé avec une pente égale ou supérieure à celle du fond (7) du dispositif porteur de marchandises (4).

3. Chariot à provisions selon la revendication 1 ou 2, **caractérisé** en ce que, en position de non utilisation du casier (13), le plan (15) de la surface de rangement (14) forme un angle aigu (γ) avec la cloison arrière (5) du dispositif porteur de marchandises (4).

4. Chariot à provisions selon une des revendications 1 à 3, **caractérisé** en ce que, en position d'utilisation du casier (13), la surface de rangement (14) prend une position descendante vers l'arrière, à l'opposé de la direction de poussée du chariot à provisions (1).

5. Chariot à provisions selon une des revendications 1 à 4, **caractérisé** en ce que des longerons (16) mènent vers le haut à partir de la surface de rangement (14) et sont montés en des points d'articulation (18) qui se trouvent, en étant situés sur l'axe de pivotement (19), sur les cloisons latérales (8) ou à l'intérieur des contours des cloisons latérales (8) du dispositif porteur de marchandises (4).

6. Chariot à provisions selon la revendication 5, **caractérisé** en ce que les longerons (16) mènent vers le bas à la surface de rangement (14) sur les côtés extérieurs des cloisons latérales (8).

7. Chariot à provisions selon la revendication 5 ou 6, **caractérisé** en ce que les longerons (16) sont reliés, au-dessus de la surface de rangement (14), par au moins un moyen de butée (17) sous la forme d'une barre transversale.

8. Chariot à provisions selon une des revendications 5 à 7, **caractérisé** en ce que la largeur (A) de la surface de rangement (14) est inférieure à l'écartement (B) des longerons (16) et inférieure à l'écartement (C) des supports (3) du châssis (2), qui portent le dispositif porteur de marchandises (4).

9. Chariot à provisions selon la revendication 7 ou 8, **caractérisé** en ce que le ou les moyens de butée (17) sont disposés, dans la position de non utilisation du casier (13), au plus à même hauteur ou plus bas que la délimitation arrière inférieure (7') du fond (7) du dispositif porteur de marchandises (4).

10. Chariot à provisions selon une des revendications 1 à 9, **caractérisé** en ce que la profondeur (T) de la surface de rangement (14), mesurée dans la direction de poussée du chariot à provisions (1), est égale à environ 150 mm.

11. Chariot à provisions selon une des revendications 1 à 10, **caractérisé** en ce que le casier (13), dans sa position déployée d'utilisation, s'adapte automatiquement à l'épaisseur de l'objet respectif (20) qui se trouve sur la surface de rangement (14).
